Europäisches Patentamt

European Patent Office

Office européen des brevets

(19)

(11) Publication number: **0 118 188**
**A1**

# (12) EUROPEAN PATENT APPLICATION

(21) Application number: **84300526.5**

(22) Date of filing: **27.01.84**

(51) Int. Cl.³: **G 11 B 5/48**
**G 11 B 5/27**

(30) Priority: **08.02.83 JP 19198/83**

(43) Date of publication of application:
**12.09.84 Bulletin 84/37**

(84) Designated Contracting States:
**AT DE FR GB NL**

(71) Applicant: **SONY CORPORATION**
**7-35 Kitashinagawa 6-Chome Shinagawa-ku**
**Tokyo 141(JP)**

(72) Inventor: **Tanaka, Yoshinori c/o Patent Division**
**Sony Corporation 7-35 Kitashinagawa-6**
**Shinagawa-ku Tokyo(JP)**

(74) Representative: **Thomas, Christopher Hugo et al,**
**D Young & Co 10 Staple Inn**
**London WC1V 7RD(GB)**

(54) **Magnetic disc recording and reproducing apparatus.**

(57) A magnetic disc recording and reproducing apparatus for recording signals on a rotatable magnetic disc (1) comprises a recording/reproducing head (5) movable in a radial direction relative to the disc (1) and an erasing head or heads (6, 7) integrally mounted together with the recording/reproducing head (5) for immediately erasing both edges of the recorded pattern formed by the recording/reproducing head (5) on the disc (1), the recording/reproducing head (5) and the erasing head or heads (6, 7) being positioned so that a diametrical line (A'-A) passing through the centre (11) of the disc (1) lies between a gap (8) of the recording/reproducing head (5) and the gap (9, 10) of the erasing head or heads (6, 7).

FIG.4

EP 0 118 188 A1

1

## MAGNETIC DISC RECORDING AND REPRODUCING APPARATUS

This invention relates to magnetic disc recording and reproducing apparatus, for example, a floppy disc drive unit.

In a data recording and reproducing apparatus using a floppy disc, a high-precision mechanism is required if a high track density is to be achieved. Accordingly, the relationship between track pitch error and tracking error is an important design factor. If the allowable error of the drive mechanism, which is included in the overall tracking error, is relatively large, the precision of the drive mechanism can be low and the apparatus can be made less expensively. At least at the stage of design, tracking error (off-track) factors which may be caused during reproduction and which arise theoretically must be completely eliminated.

When concentric tracks are formed on a disc, the track pitch error changes in accordance with the distance from the centre of the disc in the radial direction. That is, the radius of curvature increases towards the centre of the disc, and so the track pitch error increases. In view of this, the design generally provides for the tracking error to remain within the allowable range, so as not to cause the worst off-track error at the innermost track during reproduction. However, in a so-called micro floppy disc having a diameter of 3.5 inches, for example, the track pitch error at the innermost track is large. For this reason, high precision is required for the chucking mechanism of the disc or the head drive mechanism, resulting in an expensive apparatus.

According to the present invention there is provided a magnetic disc recording and reproducing apparatus for recording signals on a rotatable magnetic disc, the apparatus comprising:

a recording/reproducing head movable in a radial direction relative to said magnetic disc; and

erasing head means integrally mounted with said recording/reproducing head for immediately erasing both edges of the recorded pattern formed by said recording/reproducing head on said magnetic disc;

characterised in that:

said recording/reproducing head and said erasing head means are positioned so that a diametrical line passing through the centre of said magnetic disc lies between an effective operative portion of said recording/reproducing head and an effective operative portion of said erasing head means.

In a preferred embodiment of the invention there is provided a magnetic disc recording and reproducing apparatus wherein a recording/reproducing head and a so-called tunnel erasing head are arranged along the rotating direction of a disc-shaped magnetic recording medium such that the recording/reproducing head is followed by the erasing head, and effective operative portions of the recording/reproducing head and of the erasing head are arranged on respective sides of a line A-A' passing through the centre of the disc. With this construction, high performance is obtained without requiring too high a precision of the drive mechanism.

The invention will now be described by way of example with reference to the accompanying drawings, throughout which like parts are referred to by like references, and in which:

Figure 1 is a schematic plan view showing a known floppy disc and a conventional head assembly;

Figures 2 and 3 are partial, detailed plan views showing as enlarged the track and head assembly shown in Figure 1; and

Figure 4 is a partial plan view showing an embodiment of recording and reproducing apparatus according to the present invention.

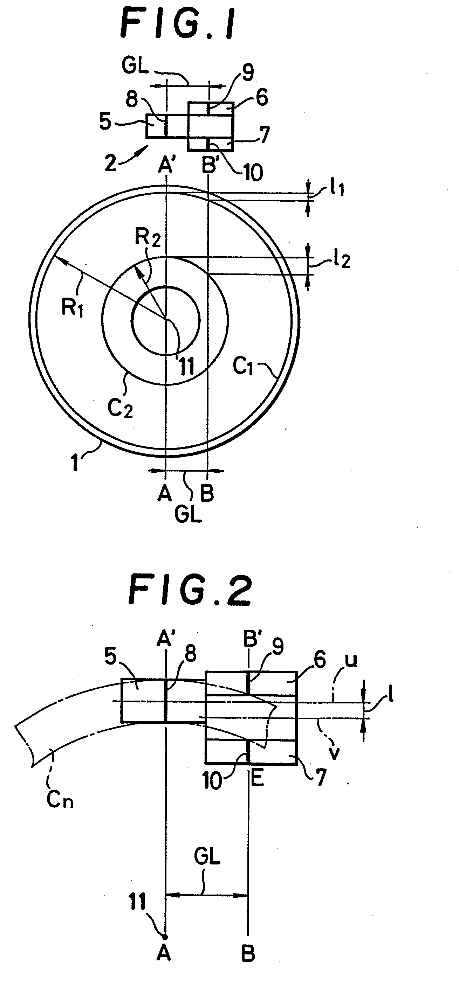

Referring to Figure 1, a floppy disc 1 comprises a resin film and a magnetic material coating formed on one or two surfaces of the resin film. A number of concentric tracks including an innermost track $C_2$ and an outermost track $C_1$ are formed on the floppy disc 1 and digital signals or the like are recorded thereon or are reproduced therefrom by a head assembly 2 shown enlarged above the disc 1. The head assembly 2 has a recording/reproducing head 5 and a pair of erasing heads 6 and 7 which follow the head 5 along the rotating direction of the disc 1.

As shown in Figure 2, a gap 8 of the conventional recording/reproducing head 5 is on a diametrical line A-A' passing through the centre 11 of the disc 1. The head assembly 2 is moved along the line A-A'. Thus, the head step pitch and the track pitch are set to be substantially the same. Gaps 9 and 10 of the erasing heads 6 and 7 are located on respective sides of the gap 8 of the recording/reproducing head 5 along the radial direction of the disc 1. The erasing heads 6 and 7 together perform tunnel erasing, and guard bands having a width equal to that of the erasing heads 6 and 7 are formed at each side of each track.

When the distance between the gap 8 of the recording/reproducing head 5 and the gaps 9 and 10 of the erasing heads 6 and 7, respectively, is designated by GL (0.7 to 0.9 mm), a dislocation occurs between a track and the erasing heads 6 and 7 in accordance with a radius of curvature of a track $C_n$. In order to eliminate such a dislocation, as shown in Figure 2, a line v passing mid-way between the erasing heads 6 and 7 is offset by a distance l from a central line u through the recording/reproducing head 5. However, the dislocation of the erasing heads 6 and 7 from a track changes in accordance with the position of the track $C_n$; it has a minimum value $l_1$ at the outermost track $C_1$ and has a maximum value $l_2$ at the innermost track $C_2$. Accordingly, such dislocations $l_1$ and $l_2$ cannot be cancelled for all tracks with the fixed offset distance l. Accordingly, a tracking error of the gaps 9 and 10 of the erasing heads 6 and 7 is theoretically caused, which results in a track pitch error.

Since the track pitch on a line B-B and that on the line A-A' are different from each other, a total track pitch error $\triangle p = (l_2 - l_1)$ as shown in Table 1 below is generated:

## Table 1

### Pitch Error

| Disc size | 8 inches | 5 inches | 3.5 inches |
|---|---|---|---|
| R1 (mm) | 89.6377 | 55.034 | 38.0 |
| R2 (mm) | 49.421 | 34.3965 | 23.1875 |
| $l_1$ (microns) | 3.6 | 5.8 | 8.4 |
| $l_2$ (microns) | 6.5 | 9.3 | 13.8 |
| $\triangle$ p (microns) | 2.9 | 3.5 | 5.4 |
| L (microns | 88 | 88 | 31 |
| r (%) | 3.2 | 4.0 | 17.4 |

where:  R1 = the radius of the outermost track

R2 = the radius of the innermost track

$\triangle p$ = $l_1 - l_1$ total track pitch error

L = the allowable limit of tracking error = 1/2 the width of the erasing head (In the case wherein the width of the recording/reproducing head = 2/3 of the track pitch; the width of the erasing heads = 1/3 of the track pitch)

r = $(\triangle p/L) \times 100\%$

As shown in Table 1, the track pitch error $\triangle p$ is 2.9 microns for an 8 inch disc, 3.5 microns for a 5 inch disc, and 5.4 microns for a 3.5 inch disc (all for GL = 0.8 mm). The pitch error of a 3.5 inch disc, 5.4 microns is fairly large and is 17.4% of the allowable tracking error L during reproduction. Meanwhile, 8 inch and 5 inch discs have small ratios of 3.2% and 4.0%, respectively, of the pitch error to the allowable tracking error L. The allowable tracking error L is an allowable dislocation of a head from a track during reproduction. When the width of the recording/reproducing head is 2/3 of the track pitch and the width of the erasing heads is 1/3 of the track pitch, 1/2 of the width of the erasing heads (guard band width) is defined as the allowable tracking error L. When the dislocation of the head from the track during reproduction exceeds the allowable track error L, the head may overlap the adjacent track in the worst condition, so increasing the reading error. The worst condition in this context means a case wherein the track is formed by a recording unit to have a dislocation of –L, and the head of a reproducing unit is mechanically displaced by +L from a reference position.

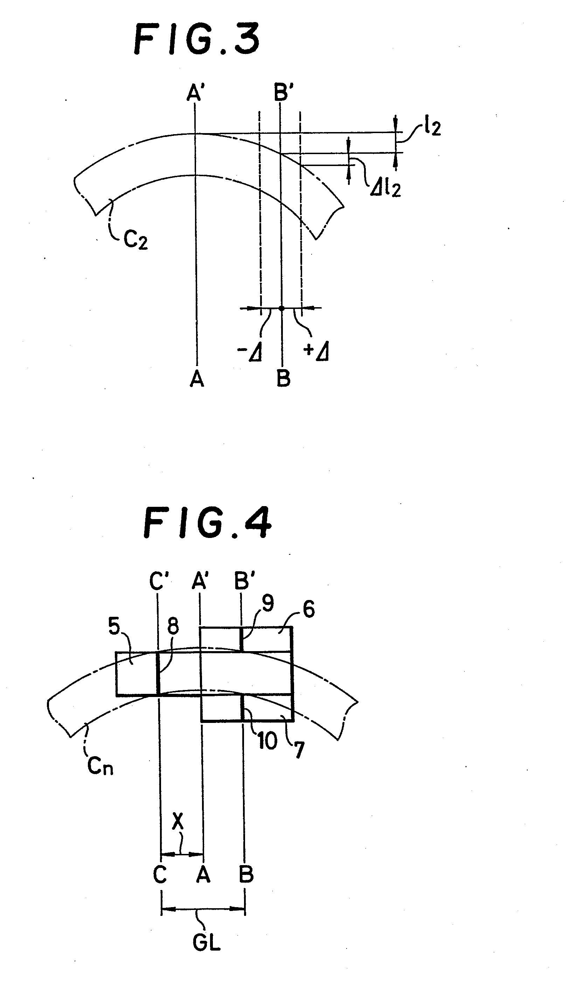

When the off-set distance l between the recording/reproducing head 5 and the erasing heads 6 and 7 is set at a track intermediate between the outermost track $C_1$ and the innermost track $C_2$, a track pitch error p/2 which is 1/2 of the track pitch error is caused in both inward and outward directions. Since the drive mechanism has a head positioning error ($\pm \triangle$ in Figure 3) of about ±50 microns in the tangential direction of the track, a further track error of $\triangle l_2$ is caused. Therefore, the innermost track (or the outermost track) has a maximum off-track error of $\triangle p/2 + \triangle l_2$. In the case of a 3.5 inch disc, the value of $\triangle p/2 + \triangle l_2$ is 4.4 microns as shown in Table 2, which is 14.2% of the allowable tracking error L (31 microns). Meanwhile, 8 inch and 5 inch discs have the off-track error values of $\triangle p/2 + \triangle l_2$ of 2.6% and 2.96%, respectively.

### Table 2

#### Pitch Error

| Disc size | 8 inches | 5 inches | 3.5 inches |
|---|---|---|---|
| $l_1$ (microns) | 3.6 | 5.8 | 8.4 |
| $l_2$ (microns) | 6.5 | 9.3 | 13.8 |
| $\triangle l_2$ (microns) | 0.82 | 1.21 | 1.7 |
| $\triangle p$ (microns) | 2.9 | 3.5 | 5.4 |
| $\triangle p/2 + \triangle l_2$ (microns) | 2.27 | 2.96 | 4.4 |
| L (microns) | 88 | 88 | 31 |
| r (%) | 2.6 | 2.96 | 14.2 |

With a conventional floppy disc recording and reproducing apparatus, the track pitch error becomes large for a 3.5 inch disc. Accordingly, the chucking mechanism of the disc or the head drive mechanism must have high precision.

Figure 4 is a partial enlarged view showing a track and a head assembly in an embodiment of the present invention, which is a similar view to that shown in Figure 2.

As shown in Figure 4, a gap 8 forming an effective operative portion of a recording/reproducing head 5 is arranged on a line C-C' in this embodiment. The line C-C' is shifted from a central line A-A' by a distance X in the direction opposite to the erasing heads 6 and 7. A distance GL between the gap 8 of the recording/reproducing head 5 and the gaps 9 and 10 of the erasing heads 6 and 7, respectively, must be 0.7 mm or less for an 8 inch or 5 inch standard disc format.

When the distance X between the line A-A' and the recording/reproducing head gap 8 is 0.35 mm and the gap distance GL between the gap 8 of the recording/reproducing head 5 and the gaps 9 and 10 of the erasing heads 6 and 7, respectively, is 0.7 mm, the recording/reproducing head 5 and the erasing heads 6 and 7 are symmetrical about the line A-A'. Accordingly, the erasing heads 6 and 7 need not be offset from the recording/reproducing head 5.

Table 3 below shows changes in the track pitch error when the distance X between the disc central line A-A' and the gap 8 of the recording/reproducing head 5 is changed.

## Table 3

### Pitch Error

| | | | | |
|---|---|---|---|---|
| X (mm) | 0.7 | 0.8 | 0.9 | 0.35 |
| $l_1$ (microns) | 6.45 | 8.4 | 10.66 | 1.62 |
| $l_2$ (microns) | 10.57 | 13.8 | 17.474 | 2.64 |
| $\Delta l_2$ (microns) | 1.56 | 1.7 | 1.996 | 0.81 |
| $\Delta p$ (microns) | 4.12 | 5.4 | 6.8 | 1.02 |
| $\Delta p/2 + \Delta l_2$ (microns) | 3.62 | 4.4 | 5.4 | 1.32 |
| L (microns) | 3 | 31 | 31 | 31 |
| r (%) | 11.7 | 17.4 | 17.4 | 4.24 |

As shown in Table 3, when X = 0.35 mm, the total pitch error $\Delta p$ at the line C-C' is 1.02 microns. This value is the pitch error with respect to the recording/reproducing head gap 8. The pitch error for the erasing head gaps 9 and 10 is smaller than 1.02 microns for GL = 0 to 0.7 mm. The value of the off-track error $\Delta p/2 + \Delta l_2$ of the recording/reproducing head 5 is 1.32 microns. This value is 4.24% of the allowable tracking error L (31 microns) and is very small. Accordingly, the requirement for precision of the disc and head drive mechanism is moderated. The tracking error of the erasing heads 6 and 7 will not exceed 1.32 microns for GL = 0 to 0.7 mm.

When the head arrangement for a 5 inch or 8 inch disc wherein the gap distance GL is 0.9 mm (0.7 to 0.9 mm) is applied to a 3.5 inch disc and X = 0.9 mm (X in this case is the distance between the line A-A' and the erasing head gap) as shown in Figure 3, the tracking error of the erasing heads reaches 5.4 microns. This is 17.4% of the allowable tracking error L, and the mechanical tracking error allowed for the disc and the head drive mechanism is reduced from 31 microns to 25.4 microns. That is, a higher precision is required.

When the head arrangement as shown in Figure 4 is adopted, the tracking error margin is increased, and satisfactory recording and/or reproducing performance may be obtained without requiring a high precision in the drive mechanism. In the embodiment shown in Figure 4, the gap 8 of the recording/reproducing head 5 and the gaps 9 and 10 of the erasing heads 6 and 7, respectively, are arranged symmetrically about the central line A-A'. However, the present invention is not limited to this particular arrangement. The effect of the present invention may be obtained with an asymmetrical gap arrangement with respect to the central line A-A'. Note that the present invention is similarly applicable to a straddle erase system which uses a DC erasing head (permanent magnet head) and which does not have a gap.

In summary, in embodiments of the invention, since the recording/reproducing head and the erasing heads are arranged on respective sides of a line passing the centre of the disc, the track pitch error can be reduced to a minimum. In addition, the ratio of the track pitch error to the allowable tracking error between the head and a track becomes small, so that very high precision is not required for parts of the chucking mechanism of the disc and the head drive mechanism.

## CLAIMS

1.    A magnetic disc recording and reproducing apparatus for recording signals on a rotatable magnetic disc (1), the apparatus comprising:

a recording/reproducing head (5) movable in a radial direction relative to said magnetic disc (1); and

erasing head means (6, 7) integrally mounted with said recording/reproducing head (5) for immediately erasing both edges of the recorded pattern formed by said recording/reproducing head (5) on said magnetic disc (1);

characterised in that:

said recording/reproducing head (5) and said erasing head means (6, 7) are positioned so that a diametrical line (A'-A) passing through the centre (11) of said magnetic disc (1) lies between an effective operative portion (8) of said recording/reproducing head (5) and an effective operative portion (9, 10) of said erasing head means (6, 7).

2.    Apparatus according to claim 1 wherein said erasing head means (6, 7) has two effective gaps (9, 10) spaced from each other by the effective recording track width in the radial direction of said magnetic disc (1).

3.    Apparatus according to claim 1 or claim 2 wherein said recording/reproducing head (5) and said erasing head means (6, 7) are positioned symmetrically relative to said diametrical line (A'-A).

# FIG.1

# FIG.2

0118188

# FIG.3

# FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 367 505 (R.R. STROMSTA et al.) * Column 1, line 1 - column 2, line 27; column 4, lines 37-58; figure 3 * | 1,2 | G 11 B 5/48 G 11 B 5/27 |
| | --- | | |
| Y | GB-A-2 098 378 (YE DATA INC.) * Page 1, lines 1-73; page 2, lines 1-18; figure 9 * | 1,2 | |
| | --- | | |
| A | US-A-4 300 174 (J.H. HARMAN et al.) * Column 3, lines 31-55; figure 1 * | 1 | |
| | --- | | |
| P,A | EP-A-0 096 418 (HITACHI) | | |
| | ----- | | TECHNICAL FIELDS SEARCHED (Int. Cl. 3) |
| | | | G 11 B 5/00 |

The present search report has been drawn up for all claims

| Place of search | Date of completion of the search | Examiner |
|---|---|---|
| BERLIN | 04-04-1984 | ROGNONI M.G.L. |